(19) Europäisches Patentamt
European Patent Office
Office européen des brevets

(11) EP 4 542 256 A1

(12) EUROPEAN PATENT APPLICATION
published in accordance with Art. 153(4) EPC

(43) Date of publication:
23.04.2025 Bulletin 2025/17

(51) International Patent Classification (IPC):
G01S 11/08 (2006.01)       G01S 13/84 (2006.01)

(21) Application number: 23823459.5

(52) Cooperative Patent Classification (CPC):
G01S 11/08; G01S 13/84

(22) Date of filing: 01.03.2023

(86) International application number:
PCT/JP2023/007511

(87) International publication number:
WO 2023/243155 (21.12.2023 Gazette 2023/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 17.06.2022 JP 2022098457

(71) Applicant: Alps Alpine Co., Ltd.
Tokyo 145-8501 (JP)

(72) Inventor: WAKANA, Keigo
Tokyo 145-8501 (JP)

(74) Representative: Maiwald GmbH
Engineering
Elisenhof
Elisenstrasse 3
80335 München (DE)

(54) **DISTANCE MEASUREMENT DEVICE**

(57) A range finding device is provided that is capable of selecting between range finding based on a phase difference and range finding based on a frequency spectrum depending on conditions of a signal exchanged with a communication device. The range finding device includes: a first range finder to perform range finding by a first range finding method based on a phase difference of a signal received from a transmitter and output a first distance; a second range finder to perform range finder based on a second range finding method based on a frequency spectrum of the signal received from the transmitter and output a second distance; and a selector to select the first distance or the second distance based on a frequency spectrum or phase linearity of the signal received from the transmitter.

FIG.1

EP 4 542 256 A1

## Description

TECHNICAL FIELD

The present invention relates to a range finding device.

BACKGROUND ART

There is a range finding device that performs range finding based on phase differences between signals having a plurality of frequencies received from a transmitter (for example, see PTL 1). There is also a range finding device that performs Fourier transform of a signal received from a transmitter and performs range finding based on a frequency spectrum (for example, see PTL 2).

CITATION LIST

PATENT LITERATURE

PTL 1: Japanese Patent Application Laid-Open Publication No. 2018-197697
PTL 2: Japanese Patent Application Laid-Open Publication No. 09-152478

SUMMARY OF THE INVENTION

TECHNICAL PROBLEM

Conditions of signals received from transmitters (communication devices) determine which is more suitable, range finding based on a phase difference and range finding based on a frequency spectrum. Here, selective use of them depending on the conditions has not been practiced yet.
It is an object to provide a range finding device capable of selecting between range finding based on a phase difference and range finding based on a frequency spectrum depending on the condition of a signal exchanged with a communication device.

SOLUTION TO THE PROBLEM

A range finding device according to an embodiment of the present invention includes: a first range finder configured to perform range finding by a first range finding method based on a phase difference of a signal received from a transmitter and output a first distance; a second range finder configured to perform range finding by a second range finding method based on a frequency spectrum of a signal received from the transmitter and output a second distance; and a selector configured to select the first distance or the second distance based on a frequency spectrum distribution of a signal received from the transmitter.

ADVANTAGEOUS EFFECTS OF THE INVENTION

It is possible to provide a range finding device that can select between range finding based on a phase difference and range finding based on a frequency spectrum depending on the condition of a signal exchanged with a communication device.

BRIEF DESCRIPTION OF THE DRAWINGS

[FIG. 1] FIG. 1 is a diagram illustrating a range finding device 100 according to an embodiment.
[FIG. 2] FIG. 2 is a task diagram illustrating processes performed by a smartphone 50 and the range finding device 100.
[FIG. 3] FIG. 3 is a diagram illustrating range finding by a first range finder 132.
[FIG. 4] FIG. 4 is a diagram illustrating range finding by the first range finder 132.
[FIG. 5] FIG. 5 is a diagram illustrating range finding by a second range finder 133.

[FIG. 6] FIG. 6 is a diagram illustrating an example of a frequency spectrum after being subjected to FFT by the second range finder 133.

[FIG. 7] FIG. 7 is a diagram illustrating the items checked by a selector 134 to determine a multipath environment.

[FIG. 8] FIG. 8 is a diagram illustrating a flowchart indicating a selection process performed by the selector 134.

[FIG. 9A] FIG. 9A is a diagram illustrating a flowchart indicting a selection process according to a modified example, performed by the selector 134.

[FIG. 9B] FIG. 9B is a diagram illustrating a flowchart indicating a selection process according to a modified example, performed by the selector 134.

DETAILED DESCRIPTION OF THE INVENTION

An embodiment to which the range finding device of the present invention is applied will be described.

<Embodiment>

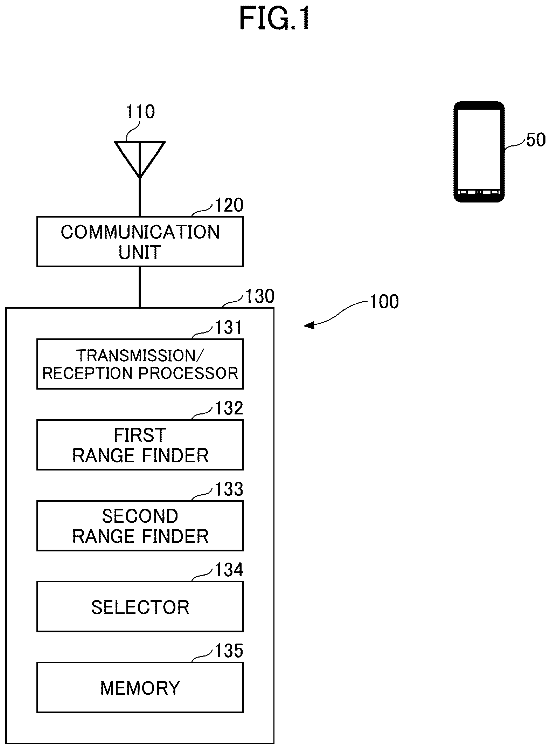

FIG. 1 is a diagram illustrating a range finding device 100 of an embodiment. FIG. 1 illustrates a smartphone 50 in addition to the range finding device 100. The smartphone 50 is an example of a communication device that transmits or receives signals, and the range finding device 100 determines the distance (or performs range finding) from the range finding device 100 to the smartphone 50 based on signals exchanged with the smartphone 50.

The range finding device 100 includes an antenna 110, a communication unit 120, and a Micro Computer (MMC) 130. The antenna 110 is connected to the communication unit 120 and receives a signal transmitted from the smartphone 50. Although a configuration in which the range finding device 100 includes one antenna 110 will be described here, the range finding device 100 may include a plurality of antennas 110.

The communication unit 120 includes an Analog Front End (AFE), an Analog to Digital (AD) converter, and the like, and performs signal processing such as AD conversion and the like of a signal received by the antenna 110 from the smartphone 50 and outputs the result to the MMC 130.

The MMC 130 includes a transmission/reception processor 131, a first range finder 132, a second range finder 133, a selector 134, and a memory 135. As an example, the MMC 130 is implemented by a microcomputer including a Central Processing Unit (CPU), a Random Access Memory (RAM), a Read Only Memory (ROM), an internal bus, and the like. The transmission/reception processor 131, the first range finder 132, the second range finder 133, and the selector 134 are representations of functions of programs executed by the MMC 130 in the form of functional blocks. The memory 135 is a functional representation of the memory of the MMC 130.

The transmission/reception processor 131 exchanges signals with the smartphone 50 in order to acquire data such as a phase difference, a frequency component, and the like that are necessary for the first range finder 132 and the second range finder 133 to perform range finding.

The first range finder 132 and the second range finder 133 perform range finding by the Time Of Arrival (ToA) method. The first range finder 132 performs range finding by a first range finding method based on a phase difference of a signal received from the smartphone 50, and outputs a first distance. The second range finder 133 performs range finding by a second range finding method based on a frequency spectrum of a signal received from the smartphone 50, and outputs a second distance. The TOA is a range finding method also referred to as Time Of Flight (TOF).

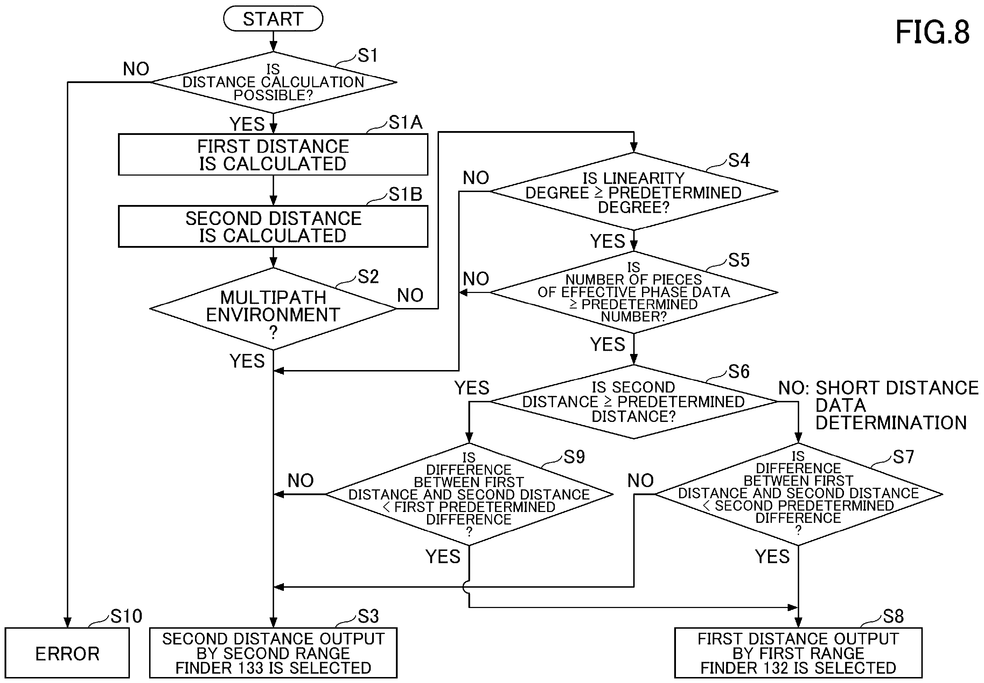

The selector 134 selects the first distance output by the first range finder 132 or the second distance output by the second range finder 133 in accordance with the condition of radio waves received by the antenna 110. The selection method will be described later with reference to FIG. 8.

The memory 135 stores programs and data necessary for the transmission/reception processor 131 to perform processes for transmitting or receiving signals, programs and data necessary for the first range finder 132 and the second range finder 133 to perform processes for range finding, and programs and data necessary for the selector 134 to perform processes for selecting the first distance or the second distance.

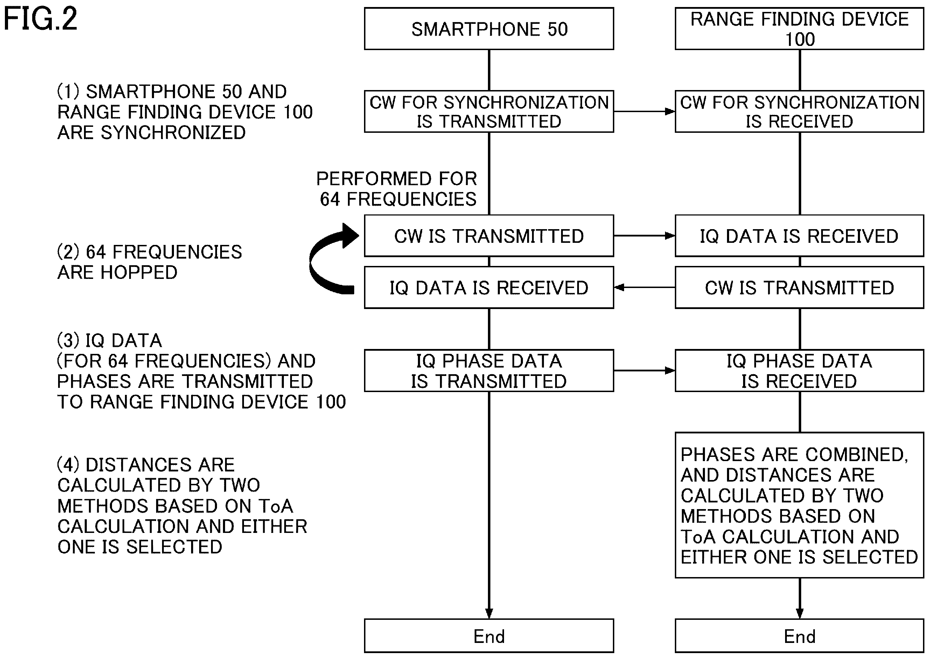

FIG. 2 is a task diagram illustrating processes performed by the smartphone 50 and the range finding device 100. First, as (1), in order for the smartphone 50 and the range finding device 100 to synchronize with each other, the smartphone 50 transmits a Continuous Wave (CW) for synchronization, and the range finding device 100 receives the CW for synchronization. In the range finding device 100, the transmission/reception processor 131 performs the reception process.

Next, as (2), the smartphone 50 and the range finding device 100 repeatedly transmit CW and receive IQ data alternately while hopping across 64 frequencies. In the range finding device 100, the transmission/reception processor 131 performs the transmission/reception process. As an example, of 160 channels in a range from 2.4 through 2.48 GHz at 0.5 MHz intervals, hopping is performed randomly across 64 channels.

Next, as (3), the smartphone 50 transmits IQ data for the 64 frequencies and phases to the range finding device 100, and the range finding device 100 receives them. In the range finding device 100, the transmission/reception processor 131 performs the reception process.

Lastly, as (4), the range finding device 100 combines the phases on the smartphone 50 side and the phases on the range finding device 100 side, performs range finding (calculates the distance) by two methods, namely, a first range finding method and a second range finding method, by ToA calculation, and selects the distance calculated by the range finding method suited to the condition. In the range finding device 100, the first range finder 132, the second range finder 133, and the selector 134 perform the process of (4).

<Range finding by the first range finder 132>

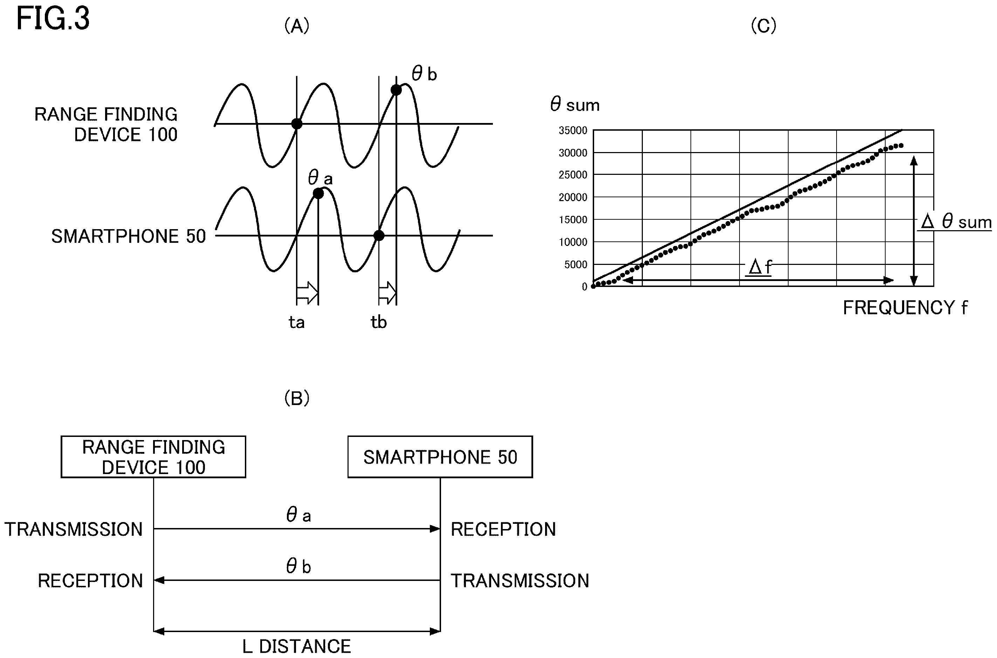

FIG. 3 is a diagram illustrating the range finding by the first range finder 132. The range finding by the first range finder 132 is particularly effective when the direct-path signal intensity is high and the multipath signal intensity is low.

As illustrated in FIGS. 3 (A) and 3 (B), the phase at which the smartphone 50 receives the CW transmitted by the range finding device 100 is denoted by $\theta a$, and the phase at which the range finding device 100 receives the CW transmitted by the smartphone 50 is denoted by $\theta b$. That is, the phase difference of the phase at which the smartphone 50 receives the CW with respect to the phase at which the range finding device 100 transmits the CW is denoted by $\theta a$, and the phase difference of the phase at which the range finding device 100 receives the CW with respect to the phase at which the smartphone 50 transmits the CW is denoted by $\theta b$. The phase difference $\theta a$ corresponds to a time $ta$, and the phase difference $\theta b$ corresponds to a time $tb$.

The distance between the range finding device 100 and the smartphone 50 is defined as L, and the sum of the phase $\theta a$ at which the smartphone 50 receives what is transmitted from the range finding device 100 and the phase $\theta b$ at which the range finding device 100 receives what is transmitted from the smartphone 50 is defined as a round-trip phase $\theta sum$ ($=(\theta a + \theta b) \times n$). The phase difference $\theta a$ corresponds to the time $ta$, and the phase difference $\theta b$ corresponds to the time $tb$. n represents the number of CW waves (wavelength) reciprocated between the range finding device 100 and the smartphone 50.

Here, the speed of the radio waves is denoted by C, the frequency of the radio waves is denoted by f, and the cycle of the radio waves is denoted by T ($=1/f$). The following (1) and (2) are established.
Equation 1

$$2L = C \times (ta + tb) \qquad (1)$$

Equation 2

$$(ta + tb) = \{(\theta a + \theta b) \times n/360\} \times T \qquad (2)$$

Since $(\theta a + \theta b) \times n = \theta sum$, Equation 3 is obtained from Equations 1 and 2.
Equation 3

$$2L = C\left(\frac{(\theta sum)}{360}T\right) \qquad (3)$$

Equation 4 is obtained when Equation 3 is deformed and reorganized based on $\theta sum$.
Equation 4

$$\theta sum = \frac{2(360)fL}{C} \qquad (4)$$

When the range finding device 100 and the smartphone 50 perform round-trip communications at the frequencies f1 and f2, a round-trip phase difference $\theta sum1$ at a frequency f1 and a round-trip phase difference $\theta sum2$ at a frequency f2 are obtained. The difference between θsum1 and θsum2 is the relationship of Equations (5A) and (5B).
Equation 5

$$\theta sum1 = \frac{2(360)f1L}{C}, \theta sum2 = \frac{2(360)f2L}{C} \qquad (5A)$$

$$\theta sum2 - \theta sum1 = \Delta\theta sum = \frac{2(360)L}{C}(f2 - f1) = \frac{2(360)L}{C}\Delta f \qquad (5B)$$

Based on Equations (5A) and (5B), the distance L can be calculated as expressed by Equation (6).
Equation 6

$$L = \frac{C\Delta\theta sum}{2(360)\Delta f} \qquad (6)$$

When range finding is performed at two frequencies, the distance L is as expressed by Equation (6). However, the robustness is low because even a minor phase error would result in a distance error. Thus, the range finding is performed at multiple (M) frequencies, which results as illustrated in FIG. 3 (C). In the graph illustrated in FIG. 3 (C), the horizontal axis represents the frequency f and the vertical axis represents the phase θa+θb when the radio wave has made a round trip. Since $\Delta\theta sum/\Delta f$ in Equation (6) represents the slope of the straight line, the distance L can be expressed as Equation (7) below.
Equation 7

$$L = \frac{C}{2(360)} \cdot slope \qquad (7)$$

Thus, the distance L is proportional to the slope. The first range finder 132 performs range finding based on Equation (6).

Such range finding by the first range finder 132 is a method of measuring the distance based on a phase difference, and determines the phase at which a round trip between the range finding device 100 and the smartphone 50 at each frequency has been completed. Thus, if there is a lot of noise due to the multipath effect, addition of the phases (phase differences) at all frequencies tend to generate an error. In addition, since the method needs to determine the slope, the calculation tends to be easier at shorter distances than at longer distances.

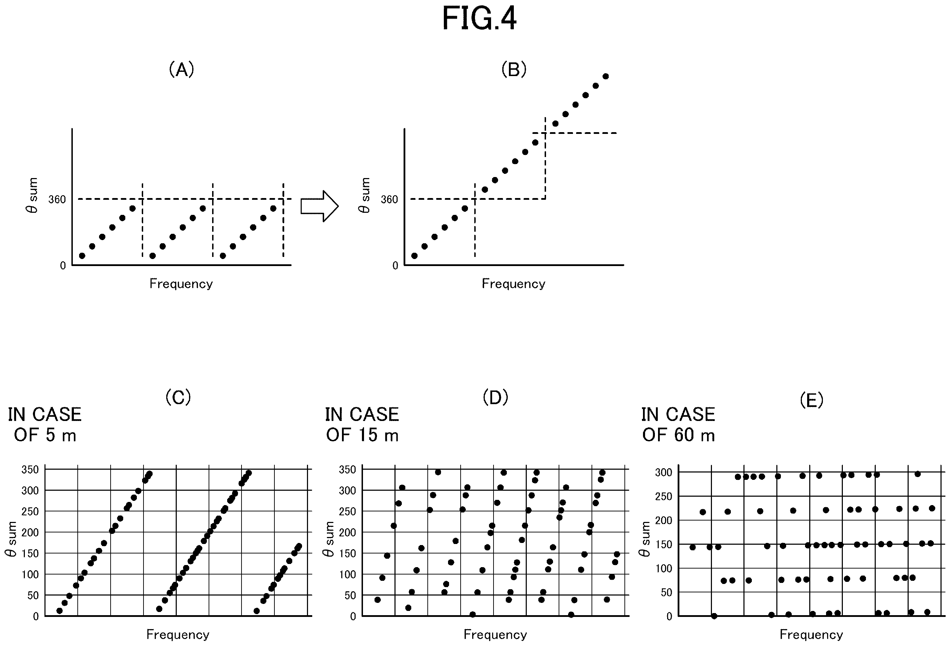

For the sake of explanation of the calculation principle, θsum indicated in FIG. 3 (C) assumes a value that is 360° or greater. However, since the radio wave that the MMC 130 actually receives does not carry the concept of wavenumber, θsum assumes a value from 0° to 360°. This is illustrated in FIG. 4. FIG. 4 is a diagram illustrating the range finding by the first range finder 132.

As illustrated in FIG. 4 (A), θsum takes a value from 0° to 360°, and appears as data that has a characteristic of repeating changes in a sawtooth wave pattern. The distance L is calculated by converting the data in FIG. 4 (A) by a conversion process of being converted into a straight line as illustrated in FIG. 4 (B). This conversion process becomes more difficult as the distance increases. This is because the data of a short distance (5 m as an example) as illustrated in FIG. 4 (C) has an easy-to-see phase linearity, making the addition process in which the value may reach or exceed 360° easier, whereas as can be seen from the data of FIG. 4 (D) of an example case of 15 m and the data of FIG. 4 (E) of an example case of 60 m, a greater slope due to a longer distance makes the phase linearity more difficult to see, making the addition process more difficult.

For this reason, the range finding by the first range finder 132 is better suited to a short distance than to a long distance, and is better suited to a direct-path environment than to a multipath environment. The range finding by the first range finder 132 will be referred to as the direct-path range finding method. The direct-path range finding method is an example of the first range finding method.

<Range finding by the second range finder 133>

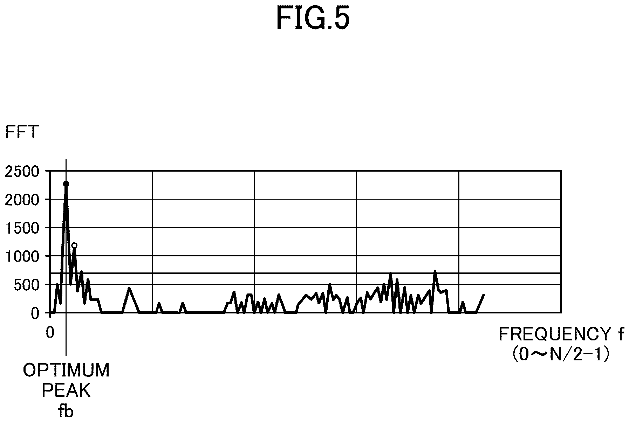

FIG. 5 is a diagram illustrating the range finding by the second range finder 133. The range finding by the second range finder 133 can be used even when the multipath signal intensity is high and the direct-path signal intensity is low, and calculation is relatively easy even when the smartphone 50 is relatively far from the range finding device 100.

The second range finder 133 converts IQ data corresponding to all 64 frequencies by Fast Fourier Transform (FFT) function. Thus, the result is obtained as a frequency spectrum illustrated in, for example, FIG. 5. In FIG. 5, the horizontal axis represents the frequency f, which corresponds to the distance. The vertical axis represents the signal intensity.

The second range finder 133 extracts the lowest frequency that has a sufficiently high signal intensity the FFT conversion result as illustrated in FIG. 5, as the frequency that provides the optimum peak. This is because a direct-path signal, which has a shorter radio wave path than that of a multipath signal, necessarily comes to a lower frequency than a multipath signal through the FFT conversion. By conversion of the selected frequency into a distance, the distance to the smartphone 50 is determined.

More specifically, with N set to 256 where N is the number of sampling buffers with which FFT is performed and with frequency intervals freq_step set to 0.5 MHz, hopping may be performed across 64 channels out of 160 channels randomly at 0.5 MHz intervals in a range from 2.4 through 2.48 GHz. Alternatively, as an example, with N set to 256 where N is the number of sampling buffers with which FFT is performed and with frequency intervals freq_step set to 2 MHz, hopping may be performed across 40 channels at 2 MHz intervals. IQ data is set in 40 buffers out of the N=256 sampling buffers. When FFT is executed, the result illustrated in FIG. 5 is obtained.

From the FFT result, the distance L can be calculated by the following equation (8).

Equation 8

$$L = \frac{C}{2N * \mathrm{freq\_step}} fb \qquad (8)$$

The frequency fb at which the optimum peak is obtained has a sufficient intensity, and is the lowest frequency at which spectrum data is obtained. The horizontal axis of the FFT result assumes discrete values, which are 0, 1, 2, **...,** and 127 (256/2-1). The frequency component of the frequency fb is a decimal number because it is determined by interpolation based on the shape of the FFT waveform.

Since the range finding by the second range finder 133 is based on the frequency components of the signal received from the smartphone 50 and includes the conversion process by the FFT function, the calculation is relatively easy even when the distance is long.

Therefore, the range finding by the second range finder 133 can be used even when the multipath effect is major and the direct path effect is minor, and the calculation is relatively easy even when the smartphone 50 is relatively far from the range finding device 100. Hereinafter, the range finding by the second range finder 133 will be referred to as the multipath range finding method. The multipath range finding method is an example of a second range finding method. However, when multipath noise is large, the calculation may become difficult.

<Selection process by the selector 134>

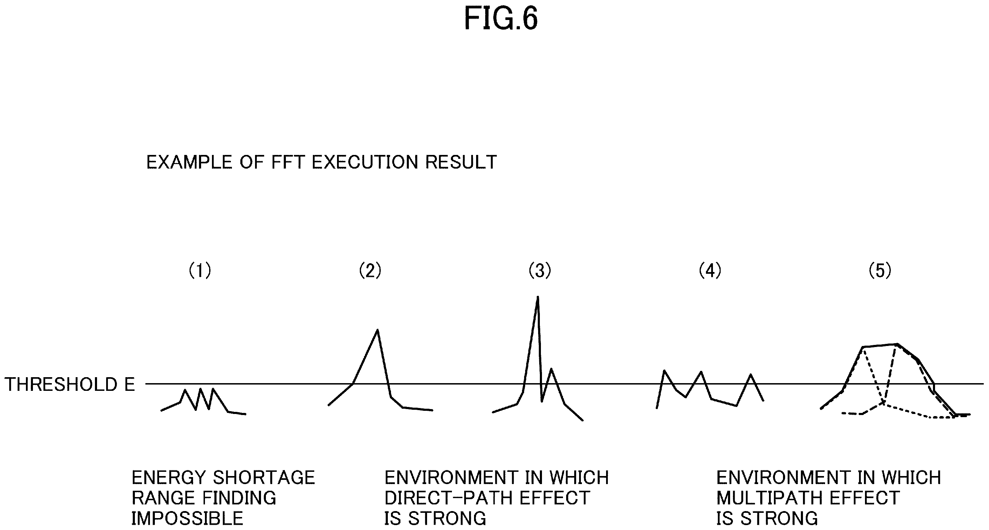

FIG. 6 is a diagram illustrating an example of a frequency spectrum after FFT execution by the second range finder 133. Referring to FIG. 6, a process for determining, based on a signal received from the smartphone 50, whether or not the distance calculation is possible and whether or not it is a multipath environment will be described. In FIG. 6, the horizontal axis represents the frequency, and the vertical axis represents the amplitude (height) of the frequency spectrum.

The selector 134 determines whether or not the distance calculation is possible using a signal intensity threshold. For example, as illustrated in (1) of FIG. 6, when the signal intensity is lower than a threshold E, the selector 134 determines that the distance calculation is not possible, and when the signal intensity is equal to or higher than the threshold E as illustrated in (2), (3), (4), and (5) of FIG. 6, the selector 134 determines that the distance calculation is possible.

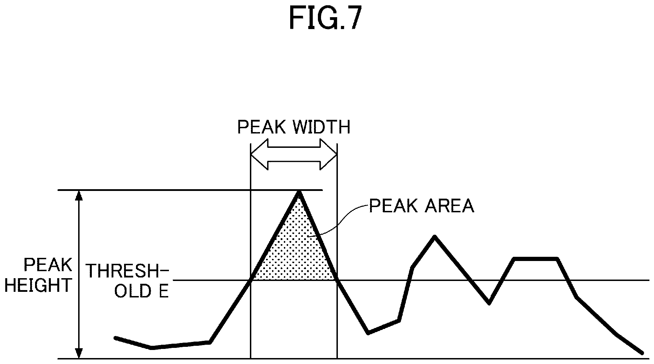

Further, as illustrated in (2) and (3) of FIG. 6, when there is one peak having a sufficiently high signal intensity and the signal intensity is equal to or higher than the threshold E, the selector 134 determines that the environment has little multipath effect and includes a lot of direct-path components. Further, as illustrated in (4) of FIG. 6, when there are a plurality of peaks having a signal intensity equal to or higher than the threshold, the selector 134 determines that the environment has a strong multipath effect. As illustrated in (5) of FIG. 6, also when a plurality of peaks overlap and form a single peak, the selector 134 determines that the environment has a strong multipath effect. However, since there may be a case where it is not easy to determine whether the environment is under direct-pathing or multipathing, the selector 134 performs determination based on each part of the signal as illustrated in FIG. 7.

FIG. 7 is a diagram illustrating the items checked by the selector 134 to determine that the environment is a multipath environment. In FIG. 7, the horizontal axis represents frequency, and the vertical axis represents amplitude (height) of the frequency spectrum. The number of peaks in the frequency spectrum illustrated as an example in FIG. 7 is three.

As illustrated in FIG. 7, the selector 134 extracts the peak height, the peak width, and the peak area of the highest peak, and the number of peaks, and uses them when determining whether the environment is a multipath environment or a direct-path environment in step S2 of FIG. 8, which will be described later. The peak height is the height from the lowest point to the highest point of the highest peak. The peak width is the amplitude in the horizontal axis direction at the level of the peak height threshold E. The peak area is the area of a part of the highest peak that is equal to or higher than the threshold E. The number of peaks is the number of peaks equal to or higher than the peak height threshold E.

The selector 134 determines whether or not the environment is a multipath environment as follows. In a case where there is a peak equal to or higher than the peak height threshold E, the selector 134 determines that the environment is a direct-path environment and is not a multipath environment when the peak width, at the peak height threshold E, of the highest peak among one or more extracted peaks is equal to or less than a threshold D in the bandwidth direction (the horizontal axis direction in FIG. 7), when the peak area of the highest peak is equal to or greater than an area threshold S, or when the peak height of the highest peak is equal to or higher than a peak height threshold h.

In a case where there are a plurality of peaks equal to or higher than the peak height threshold E, the selector 134 determines that the environment is a multipath environment when the peak width at the peak height threshold E is greater than the threshold D in the bandwidth direction (the horizontal axis direction in FIG. 7), when the peak area is less than the area threshold S, or when the peak height is lower than the peak height threshold h. A specific process by which the selector 134 selects a distance measured by the direct-path range finding method (first distance) or a distance measured by the multipath range finding method (second distance) will be described below with reference to the flowchart of FIG. 8.

FIG. 8 is a flowchart illustrating the selection process performed by the selector 134. As a premise, it is assumed that the first range finder 132 and the second range finder 133 have measured the first distance and the second distance from the range finding device 100 to the smartphone 50 by the above-described range finding methods.

Upon starting the process, the selector 134 determines whether the distance calculation is possible (step S1). For example, when the intensity is lower than the threshold E as illustrated in (1) of FIG. 6, the selector 134 determines that the distance calculation is not possible (S1: NO), and moves the flow to step S10 to determine that there is an error (a state in which the distance calculation is not possible) (step S10).

On the other hand, when the selector 134 determines in step S1 that the distance calculation is possible (S1: YES), the flow moves to step S1A. For example, when the signal intensity is equal to or higher than the threshold E as illustrated in (2), (3), (4), and (5) of FIG. 6, the selector 134 determines that the distance calculation is possible (S1: YES), and moves the flow to step S2 via steps S1A and S1B. More specifically, the process is as follows.

The first range finder 132 performs the range finding by the direct-path range finding method based on equation (6), and obtains a distance L (first distance) (step S1A).

The second range finder 133 performs the range finding by the multipath range finding method based on equation (8), and obtains a distance L (second distance) (step S1B).

The selector 134 performs FFT on the signal received from the smartphone 50 and determines whether or not the environment is a multipath environment based on the obtained frequency spectrum (step S2). Determining whether or not the environment is a multipath environment is determining whether or not the environment is a multipath environment (step S2: YES) or a direct-path environment (step S2: NO). Which the frequency spectrum of the signal is, for example, a direct-path environment as illustrated in (2) and (3) of FIG. 6 or a multipath environment as illustrated in (4) and (5) of FIG. 6 is determined.

It is determined in step S2 that the environment is a multipath environment (step S2: YES) when it is determined that the signal corresponds to (4) and (5) of FIG. 6. As described with reference to FIG. 7, in a case where there are a plurality of peaks equal to or higher than the peak height threshold E, a multi-path environment determination is made when the peak width at the peak height threshold E is greater than the threshold D in the bandwidth direction (the horizontal axis direction in FIG. 7), when the peak area is less than the area threshold S, or when the peak height is lower than the peak height threshold h.

In a case of determining in step S2 that the environment is a multipath environment (step S2: YES), the selector 134 selects the second distance calculated by the second range finder 133 by the range finding based on the multipath range finding method (step S3). That is, the multipath range finding method is adopted.

When the selector 134 determines in step S2 that the environment is not a multipath environment (S2: NO), since the environment is a direct-path environment, the result of the direct-path range finding method and the result of the multipath range finding method both have the possibility of being selectable. Therefore, in order to determine the selectability of the direct-path range finding method, the selector 134 determines whether the degree of the phase linearity of the signal received from the smartphone 50 is equal to or greater than a predetermined degree (step S4).

The phase linearity of the signal received from the smartphone 50 is, for example, represented by a correlation coefficient indicating a frequency-phase correlation. By determining a correlation coefficient indicating a frequency-phase correlation regarding phases of a CW obtained by hopping across 64 frequencies, it is determined whether the phase linearity of the signal received from the smartphone 50 is equal to or greater than the predetermined degree.

The correlation coefficient indicating the frequency-phase correlation can be represented by, for example, the absolute value of the Pearson's correlation coefficient. When the phases at respective frequencies are on a straight line, the correlation is high (the correlation coefficient is large). When the phases at respective frequencies are dispersed, the correlation is low (the correlation coefficient is small). The correlation coefficient is indicated by the slope of the straight line representing the frequency-phase correlation.

The closer the absolute value of the correlation coefficient is to 1, the stronger the correlation (the higher the degree of linearity), whereas the closer the absolute value of the correlation coefficient is to 0, the weaker the correlation (the lower the degree of linearity). When the absolute value of the correlation coefficient is close to 1, the direct-path range finding method is suitable. The absolute value of the correlation coefficient between the frequency and the phase being close to 1 means that the direct-path range finding method can be used for measurement from a low frequency to a high frequency, that is, from a short distance to a long distance. Therefore, when the absolute value of the correlation coefficient is close to 1, the direct-path range finding method is suitable. The direct-path range finding method is suitable for measuring short distances. For this reason, when it is determined in step S2 that the environment is not a multi-path environment (S2: NO), the flow moves to step S4, and when all the determinations in steps S4, S5, S6, S7, and S9 are YES, the distance L (first distance) obtained by the range finding by the direct-path range finding method is adopted. That is, when there is a linearity and the distance is short, the direct-path range finding method is basically adopted.

When the Pearson's correlation coefficient (a value that is not the absolute value) is a positive value, the direct-path range finding method may be determined to not be adopted, because such a case means an abnormal state in which the distance ultimately obtained by the direct-path range finding method becomes a negative value.

The predetermined degree used for the determination in step S4 may be set to a value close to 1, such as from 0.9 through 1, and in step S4, it may be determined whether or not the value that is not the absolute value is a negative value.

When it is determined in step S4 that the degree of phase linearity of the signal received from the smartphone 50 is less than the predetermined degree (S4: NO), the selector 134 moves the flow to step S3. This is because it is not appropriate to adopt the direct-path range finding method. Also when the Pearson's correlation coefficient (a value that is not the absolute value) is a positive value, the selector 134 may move the flow to step S3. As a result, the second distance obtained by the multipath range finding method is selected.

When it is determined in step S4 that the degree of phase linearity of the signal received from the smartphone 50 is equal to or greater than the predetermined degree (S4: YES), the selector 134 determines whether or not the number of pieces of effective phase data in a predetermined frequency band is equal to or greater than a predetermined number (step S5). This is to confirm whether or not the direct-path range finding method is selectable.

The predetermined frequency band is, for example, a WiFi communication frequency band. When the signal to be received from the smartphone 50 is affected by, for example, WiFi radio waves, no signal in the WiFi communication frequency band will be received, resulting in phase data omission or a large variation. When this occurs, it is difficult to appropriately calculate the distance by the direct-path range finding method. Therefore, the direct-path range finding method may be determined to not be adopted.

The predetermined frequency band in the determination in step S5 may be determined in advance based on the relationship between the frequency band used by the range finding device 100 and the smartphone 50 for communication and a WiFi frequency band or the like that may exist in the surroundings.

As the predetermined number of the effective phase data in the determination in step S5, a number necessary for appropriately calculating the distance by the direct-path range finding method may be determined in advance by experiment or simulation.

When it is determined in step S5 that the number of pieces of effective phase data in the predetermined frequency band is less than the predetermined number (S5: NO), the selector 134 moves the flow to step S3. This is because it is not appropriate to adopt the direct-path range finding method. As a result, the second distance determined by the multipath range finding method is selected.

When it is determined in step S5 that the number of pieces of effective phase data in the predetermined frequency band is equal to or greater than the predetermined number (S5: YES), the selector 134 determines whether the second distance measured by the second range finder 133 is equal to or greater than a predetermined distance (step S6). As described above, the direct-path range finding method is better suited to short-distance range-finding than to long-distance range-finding. Thus, the determination may be performed with the predetermined distance set to 30 m as an example.

When it is determined that the second distance measured by the second range finder 133 is less than the predetermined distance (S6: NO), the selector 134 determines whether the difference between the first distance measured by the first range finder 132 and the second distance measured by the second range finder 133 is less than a second predetermined difference (step S7).

The difference between the first distance measured by the first range finder 132 and the second distance measured by the second range finder 133 being small indicates that the range-finding accuracy of the first range finder 132 and the second range finder 133 is high. The flow having moved to step S7 via steps S4 to S6 means that the conditions better suited to the direct-path range finding method than to the multipath range finding method are satisfied. Therefore, the difference between the first distance and the second distance determined in step S7 indicates whether or not the quality of the direct path is high. A small difference between the first distance and the second distance indicates that the quality of the direct path is high, and a large difference between the first distance and the second distance indicates that the quality of the direct path is low.

When it is determined that the difference between the first distance and the second distance is less than the second predetermined difference (S7: YES), the selector 134 selects the first distance output by the first range finder 132 (step S8). That is, the first distance measured by the direct-path range finding method is selected. This is because the difference between the first distance and the second distance is smaller than the second predetermined difference, so the quality of the direct path is high.

When it is determined in step S7 that the difference between the first distance and the second distance is equal to or greater than the second predetermined difference (S7: NO), the selector 134 moves the flow to step S3. This is because the quality of the direct path is low. As a result, the second distance determined by the multipath range finding method is selected.

When it is determined in step S6 that the second distance measured by the second range finder 133 is equal to or greater than the predetermined distance (S6: YES), the selector 134 determines whether or not the difference between the first distance measured by the first range finder 132 and the second distance measured by the second range finder 133 is less than a first predetermined difference (step S9).

When it is determined in step S9 that the difference between the first distance and the second distance is not less than the first predetermined difference (S9: NO), the selector 134 moves the flow to step S3. This is because moving to step S9 via steps S4 to S6 means that although the conditions better suited to the direct-path range finding method than to the multipath range finding method are satisfied, the quality of the direct path is low, so it is not appropriate to adopt the direct-path range finding method. As a result, the second distance determined by the multipath range finding method is selected.

Here, the first predetermined difference used in the determination in step S9 may be larger than the second predetermined difference used in the determination in step S7. In other words, the second predetermined difference used in the determination in step S7 may be smaller than the first predetermined difference used in the determination in step S9. The flow moves to step S9 when it is determined in step S6 that the second distance measured by the second range finder 133 is equal to or greater than the predetermined distance (S6: YES), and moves to step S7 when it is determined in step S6 that the second distance measured by the second range finder 133 is less than the predetermined distance (S6: NO).

The difference in the distance accounts for a smaller fraction of the entire distance as the distance between the range finding device 100 and the smartphone 50 is greater (i.e., the range is longer), and accounts for a greater fraction of the entire distance as the distance between the range finding device 100 and the smartphone 50 is shorter (i.e., the range is shorter). For this reason, as an example, in order to make the short-range determination stricter, the second predetermined difference used in the determination in step S7 is set to be smaller than the first predetermined difference used in the determination in step S9, and the first predetermined difference used in the determination in step S9 is set to be larger than the second predetermined difference used in the determination in step S7. Note that the first predetermined difference being larger than the second predetermined difference is an example, and the first predetermined difference may be smaller than the second predetermined difference.

When it is determined in step S9 that the difference between the first distance and the second distance is less than the first predetermined difference (S9: Yes), the selector 134 moves the flow to step S8. This is because although the distance is long, the quality of the direct path is high. As a result, the first distance obtained by the direct-path range finding method is selected.

As described above, the selector 134 selects the first distance or the second distance based on the result of FFT processing of the IQ data exchanged between the smartphone 50 and the range finding device 100, phase linearity, and the like.

Therefore, it is possible to provide a range finding device 100 capable of selecting between the first range finding method based on a phase difference and the second range finding method based on a frequency component of an FFT calculation result depending on the condition of the signal exchanged with the smartphone 50.

Further, the selector 134 determines whether or not the environment is a multipath environment based on the number of peaks, the peak height, or the peak area in the frequency spectrum resulting from FFT execution by the second range finder 133, and when it is determined that the environment is a multipath environment, selects the second distance obtained by the multipath range finding method. Therefore, it is possible to provide a range finding device 100 capable of appropriately selecting the second distance obtained by the multipath range finding method when the environment is a multipath environment.

Further, in a case where there are a plurality of peaks equal to or greater than a peak height threshold in a frequency spectrum resulting from FFT execution by the second range finder 133, the selector 134 determines that the environment is a multipath environment when the peak width at the peak height threshold E is larger than the threshold in the bandwidth direction, when the peak area is less than the area threshold S, or when the peak height is less than the peak height threshold h. Therefore, it is possible to provide a range finding device 100 capable of reliably determining whether or not the environment is a multipath environment using the peak height threshold E, the area threshold S of the peak area, and the peak height threshold h, and appropriately selecting the second distance obtained by the multipath range finding method when the environment is a multipath environment.

Even in a case where the number of the plurality of peaks in the frequency spectrum resulting from FFT execution by the second range finder 133 is not equal to or greater than a predetermined number, the selector 134 selects the second distance obtained by the multipath range finding method when the degree of phase linearity of the signal received from the smartphone 50 is less than a predetermined degree. Therefore, it is possible to provide a range finding device 100 capable of appropriately selecting the second distance obtained by the multipath range finding method when the degree of linearity is less than the predetermined degree, because the absolute value of the correlation coefficient is small and the direct-path range finding method is thus not suitable. Even when it is determined in step S2 that the environment is not a multipath environment, the linearity between frequency and phase being less than the predetermined degree in step S4 indicates that the measurement by the direct-path range finding method is not suited to some low-frequency to high-frequency bands or to all frequency bands. For this reason, when it is determined in step S2 that the environment is not a multipath environment (S2: NO) and the flow goes to step S4 once, and then any of the determinations in steps S4, S5, S6, S7, and S9 is determined to be NO, it is determined that the environment is a multipath environment, and the multipath range finding method is adopted. When there is no linearity or the distance is long, the multipath range finding method is basically adopted.

Even when the degree of phase linearity of the signal received from the smartphone 50 is equal to or greater than the predetermined degree, the selector 134 selects the second distance determined by the multipath range finding method when the number of pieces of effective phase data in a predetermined frequency band is less than a predetermined number. For example, when no signal in a WiFi communication frequency band has been received, consequent phase data omission or large variation may make it difficult to appropriately calculate the distance by the direct-path range finding method. Thus, it is possible to provide a range finding device 100 that selects the second distance determined by the multipath range finding method that is better suited to such a situation.

Moreover, even when the number of pieces of effective phase data in the predetermined frequency band is equal to or greater than the predetermined number, the selector 134 selects the second distance determined by the multipath range finding method when the second distance measured by the second range finder 133 is equal to or greater than a predetermined distance. The direct-path range finding method is better suited to measuring short distances than to long distances. Thus, it is possible to provide a range finding device 100 that selects the multipath range finding method that can handle long distances.

Further, when the second distance measured by the second range finder is equal to or greater than the predetermined distance and the difference between the first distance measured by the first range finder and the second distance measured by the second range finder is equal to or greater than a first predetermined difference, the selector 134 selects the second distance determined by the multipath range finding method, because the quality of the direct path is low and it is not appropriate to adopt the direct-path range finding method. Thus, it is possible to provide a range finding device 100 that selects the multipath range finding method when the quality of the direct path is low.

Further, even when the number of pieces of effective phase data in the predetermined frequency band is equal to or greater than the predetermined number and the second distance measured by the second range finder is less than the predetermined distance, the selector 134 selects the second distance determined by the multipath range finding method when the difference between the first distance measured by the first range finder and the second distance measured by the second range finder is equal to or greater than a second predetermined difference, because the quality of the direct path is low and it is not appropriate to adopt the direct-path range finding method. Thus, it is possible to provide a range finding device 100 that selects the multipath range finding method when the quality of the direct path is low.

The selector 134 selects the first distance determined by the direct-path range finding method when the number of pieces of effective phase data in the predetermined frequency band is equal to or greater than the predetermined number, the second distance measured by the second range finder is less than the predetermined distance, and the difference between the first distance measured by the first range finder and the second distance measured by the second range finder is less than the second predetermined difference. It is possible to provide a range finding device 100 that selects the first distance determined by the direct-path range finding method when the plurality of conditions (steps S2 to S6) for selecting the direct-path range finding method are satisfied and the quality of the direct path is high.

The first predetermined difference is larger than the second predetermined difference. Since the difference in the distance accounts for a smaller fraction of the entire distance as the distance between the range finding device 100 and the

**EP 4 542 256 A1**

smartphone 50 is longer (i.e., the range is longer), and accounts for a larger fraction of the entire distance as the distance between the range finding device 100 and the smartphone 50 is shorter (i.e., the range is shorter), it is possible to make the short-range determination stricter, by making the first predetermined difference larger than the second predetermined difference.

<Selection process of modified examples>

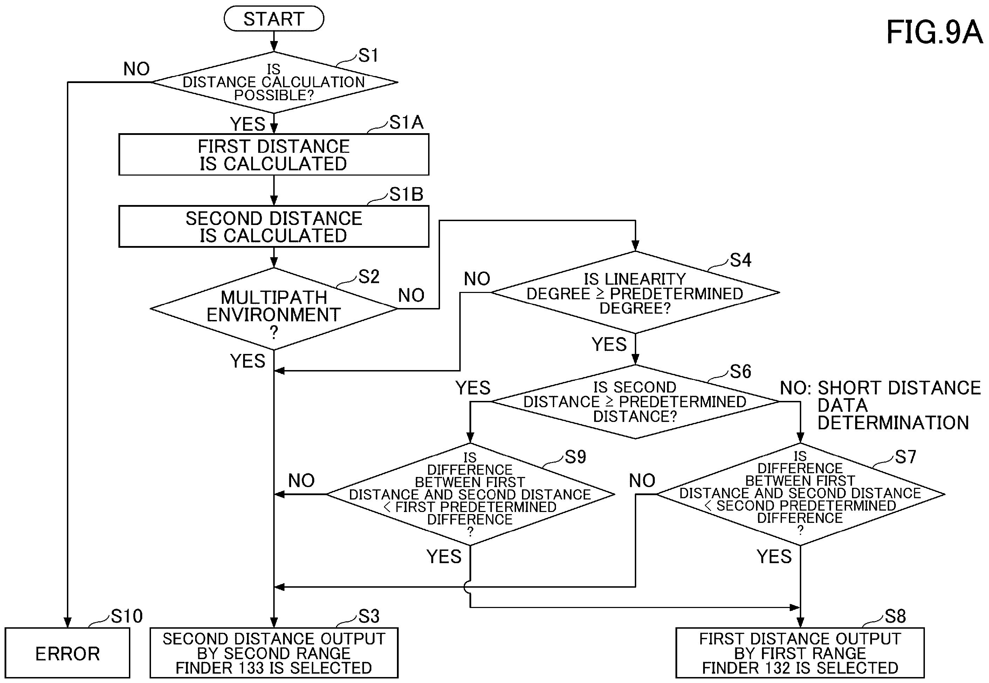

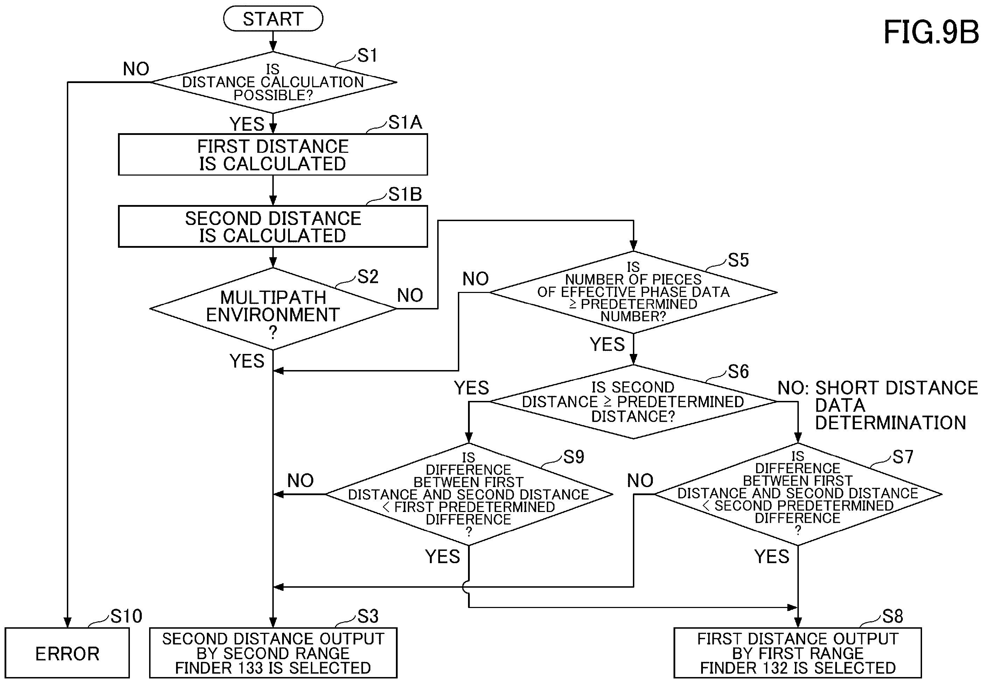

FIGS. 9A and 9B are flowcharts illustrating the selection process of modified examples, performed by the selector 134.

The flowchart illustrated in FIG. 9A illustrates a version of the flow of the flowchart illustrated in FIG. 8, from which the process of step S5 is omitted. In FIG. 9A, when it is determined in step S2 that the environment is not a multipath environment but rather a direct-path environment (S2: NO), and it is determined in step S4 that the degree of phase linearity of the signal received from the smartphone 50 is equal to or greater than the predetermined degree (S4: YES), the selector 134 moves the flow to step S6 to determine whether the second distance measured by the second range finder 133 is equal to or greater than the predetermined distance (step S6). In this way, in a case it is determined that the environment is a direct-path environment (S2: NO), the selector 134 may move the flow from step S4 to step S6 without going through the process of step S5 illustrated in FIG. 8.

The flowchart illustrated in FIG. 9B illustrates a version of the flow of the flowchart illustrated in FIG. 8, from which the process of step S4 is omitted. In FIG. 9B, when it is determined in step S2 that the environment is not a multipath environment but rather a direct-path environment (S2: NO), the selector 134 moves the flow to step S5 to determine whether or not the number of pieces of effective phase data in the predetermined frequency band is equal to or greater than the predetermined number (step S5). When it is determined that the number of pieces of effective phase data in the predetermined frequency band is equal to or greater than the predetermined number (S5: YES), the selector 134 determines whether or not the second distance measured by the second range finder 133 is equal to or greater than the predetermined distance (step S6). In this way, when it is determined that the environment is a direct-path environment (S2: NO), the selector 134 may move the flow from step S2 to step S5 without going through the process of step S4 illustrated in FIG. 8.

Although the range finding device of the exemplary embodiment of the present invention has been described above, the present invention is not limited to the specifically disclosed embodiment, and various modifications and changes are applicable without departing from the scope of the claims.

The present international application claims priority based on Japanese Patent Application 2022-098457 filed June 17, 2022, the entire contents of which are incorporated herein by reference.

REFERENCE SIGNS LIST

50 smartphone
100 range finding device
110 antenna
120 communication unit
130 MMC
131 transmission/reception processor
132 first range finder
133 second range finder
134 selector
135 memory

**Claims**

1. A range finding device, comprising:

a first range finder configured to perform range finding by a first range finding method based on a phase difference of a signal exchanged with a communication device, and output a first distance;
a second range finder configured to perform range finding by a second range finding method based on a frequency spectrum of the signal exchanged with the communication device, and output a second distance; and
a selector configured to select the first distance or the second distance based on the frequency spectrum of the signal exchanged with the communication device.

2. The range finding device according to claim 1,
wherein the selector determines whether or not an environment is a multipath environment based on a number of peaks, a peak height, or a peak area in the frequency spectrum of the signal, and when determining that the environment is the multipath environment, selects the second distance.

3. The range finding device according to claim 2,
wherein in a case where the frequency spectrum of the signal includes a plurality of peaks equal to or greater than a threshold for the peak height, the selector determines that the environment is the multipath environment when a peak width at the threshold for the peak height is greater than a threshold in a bandwidth direction, when the peak area is less than an area threshold, or when the peak height is less than a threshold for the peak height.

4. The range finding device according to claim 2,
wherein in a case of determining that the environment is not the multipath environment, the selector selects the second distance when a degree of phase linearity of the signal exchanged with the communication device is less than a predetermined degree.

5. The range finding device according to claim 2,
wherein when a number of pieces of effective phase data in a predetermined frequency band is less than a predetermined number, the selector selects the second distance.

6. The range finding device according to claim 2,
wherein in a case where a number of pieces of effective phase data in a predetermined frequency band is equal to or greater than a predetermined number when determining that the environment is not the multipath environment, the selector determines whether the second distance measured by the second range finder is equal to or greater than a predetermined distance.

7. The range finding device according to claim 2,
wherein in a case where a degree of phase linearity of the signal exchanged with the communication device is equal to or greater than a predetermined degree when determining that the environment is not the multipath environment, the selector determines whether the second distance measured by the second range finder is equal to or greater than a predetermined distance.

8. The range finding device according to claim 6 or 7,
wherein in a case where the second distance measured by the second range finder is equal to or greater than the predetermined distance and a difference between the first distance measured by the first range finder and the second distance measured by the second range finder is equal to or greater than a first predetermined difference, the selector selects the second distance.

9. The range finding device according to claim 6 or 7,
wherein in a case where the second distance measured by the second range finder is equal to or greater than the predetermined distance and a difference between the first distance measured by the first range finder and the second distance measured by the second range finder is less than a first predetermined difference, the selector selects the first distance.

10. The range finding device according to claim 6 or 7,
wherein even in a case where the second distance measured by the second range finder is less than the predetermined distance, the selector selects the second distance when a difference between the first distance measured by the first range finder and the second distance measured by the second range finder is equal to or greater than a second predetermined difference.

11. The range finding device according to claim 6 or 7,
wherein in a case where the second distance measured by the second range finder is less than the predetermined distance and a difference between the first distance measured by the first range finder and the second distance measured by the second range finder is less than a second predetermined difference, the selector selects the first distance.

**12.** The range finding device according to claim 6 or 7,

wherein the selector is configured to select the second distance when the second distance measured by the second range finder is equal to or greater than the predetermined distance and a difference between the first distance measured by the first range finder and the second distance measured by the second range finder is equal to or greater than a first predetermined difference, or to select the second distance when the difference between the first distance measured by the first range finder and the second distance measured by the second range finder is equal to or greater than a second predetermined difference even when where the second distance measured by the second range finder is less than the predetermined distance, and
the first predetermined difference is larger than the second predetermined difference.

**13.** The range finding device according to claim 6 or 7,

wherein the selector is configured to select the first distance when the second distance measured by the second range finder is equal to or greater than the predetermined distance and a difference between the first distance measured by the first range finder and the second distance measured by the second range finder is less than a first predetermined difference; or to select the first distance when the second distance measured by the second range finder is less than the predetermined distance and the difference between the first distance measured by the first range finder and the second distance measured by the second range finder is less than a second predetermined difference, and
the first predetermined difference is larger than the second predetermined difference.

# FIG.1

# FIG.2

EP 4 542 256 A1

(1) SMARTPHONE 50 AND RANGE FINDING DEVICE 100 ARE SYNCHRONIZED

| SMARTPHONE 50 | RANGE FINDING DEVICE 100 |
|---|---|
| CW FOR SYNCHRONIZATION IS TRANSMITTED | CW FOR SYNCHRONIZATION IS RECEIVED |

PERFORMED FOR 64 FREQUENCIES

(2) 64 FREQUENCIES ARE HOPPED

| SMARTPHONE 50 | RANGE FINDING DEVICE 100 |
|---|---|
| CW IS TRANSMITTED | IQ DATA IS RECEIVED |
| IQ DATA IS RECEIVED | CW IS TRANSMITTED |

(3) IQ DATA (FOR 64 FREQUENCIES) AND PHASES ARE TRANSMITTED TO RANGE FINDING DEVICE 100

| SMARTPHONE 50 | RANGE FINDING DEVICE 100 |
|---|---|
| IQ PHASE DATA IS TRANSMITTED | IQ PHASE DATA IS RECEIVED |

(4) DISTANCES ARE CALCULATED BY TWO METHODS BASED ON ToA CALCULATION AND EITHER ONE IS SELECTED

| | RANGE FINDING DEVICE 100 |
|---|---|
| | PHASES ARE COMBINED, AND DISTANCES ARE CALCULATED BY TWO METHODS BASED ON ToA CALCULATION AND EITHER ONE IS SELECTED |

| End | End |
|---|---|

# FIG.3

(A)

RANGE FINDING DEVICE 100

SMARTPHONE 50

$\theta b$

$\theta a$

ta    tb

(C)

$\theta$ sum

35000
30000
25000
20000
15000
10000
5000
0

$\Delta \theta$ sum

$\Delta f$

FREQUENCY f

(B)

| RANGE FINDING DEVICE 100 | | SMARTPHONE 50 |

TRANSMISSION ——— $\theta a$ ———→ RECEPTION

RECEPTION ←——— $\theta b$ ——— TRANSMISSION

L DISTANCE

EP 4 542 256 A1

# FIG.4

(A)

(B)

(C)
IN CASE
OF 5 m

(D)
IN CASE
OF 15 m

(E)
IN CASE
OF 60 m

EP 4 542 256 A1

# FIG.5

# FIG.6

EXAMPLE OF FFT EXECUTION RESULT

(1)      (2)      (3)      (4)      (5)

THRESHOLD E

ENERGY SHORTAGE
RANGE FINDING
IMPOSSIBLE

ENVIRONMENT IN WHICH
DIRECT−PATH EFFECT
IS STRONG

ENVIRONMENT IN WHICH
MULTIPATH EFFECT
IS STRONG

# FIG.7

PEAK WIDTH

PEAK AREA

PEAK HEIGHT

THRESH-OLD E

FIG.8

START

S1 — IS DISTANCE CALCULATION POSSIBLE?

NO → S10 ERROR

YES

S1A — FIRST DISTANCE IS CALCULATED

S1B — SECOND DISTANCE IS CALCULATED

S2 — MULTIPATH ENVIRONMENT?

NO → S4

S4 — IS LINEARITY DEGREE ≥ PREDETERMINED DEGREE?

NO → (to S2 YES path)

YES

S5 — IS NUMBER OF PIECES OF EFFECTIVE PHASE DATA ≥ PREDETERMINED NUMBER?

NO → (to S2 YES path)

YES

S6 — IS SECOND DISTANCE ≥ PREDETERMINED DISTANCE?

YES → S9
NO: SHORT DISTANCE DATA DETERMINATION → S7

S9 — IS DIFFERENCE BETWEEN FIRST DISTANCE AND SECOND DISTANCE < FIRST PREDETERMINED DIFFERENCE?

NO → (to S3)
YES → (to S8)

S7 — IS DIFFERENCE BETWEEN FIRST DISTANCE AND SECOND DISTANCE < SECOND PREDETERMINED DIFFERENCE?

NO → (to S3)
YES → S8

S2 YES → S3 — SECOND DISTANCE OUTPUT BY SECOND RANGE FINDER 133 IS SELECTED

S8 — FIRST DISTANCE OUTPUT BY FIRST RANGE FINDER 132 IS SELECTED

EP 4 542 256 A1

FIG.9A

EP 4 542 256 A1

FIG.9B

START

S1
IS DISTANCE CALCULATION POSSIBLE?

NO →

YES ↓

S1A
FIRST DISTANCE IS CALCULATED

S1B
SECOND DISTANCE IS CALCULATED

S2
MULTIPATH ENVIRONMENT?

NO →

YES ↓

S5
IS NUMBER OF PIECES OF EFFECTIVE PHASE DATA ≥ PREDETERMINED NUMBER?

NO →

YES ↓

S6
IS SECOND DISTANCE ≥ PREDETERMINED DISTANCE?

NO: SHORT DISTANCE DATA DETERMINATION

YES ↓

S9
IS DIFFERENCE BETWEEN FIRST DISTANCE AND SECOND DISTANCE < FIRST PREDETERMINED DIFFERENCE?

NO →

YES ↓

S7
IS DIFFERENCE BETWEEN FIRST DISTANCE AND SECOND DISTANCE < SECOND PREDETERMINED DIFFERENCE?

NO →

YES ↓

S10
ERROR

S3
SECOND DISTANCE OUTPUT BY SECOND RANGE FINDER 133 IS SELECTED

S8
FIRST DISTANCE OUTPUT BY FIRST RANGE FINDER 132 IS SELECTED

EP 4 542 256 A1

## INTERNATIONAL SEARCH REPORT

| International application No. |
| --- |
| **PCT/JP2023/007511** |

### A. CLASSIFICATION OF SUBJECT MATTER

*G01S 11/08*(2006.01)i; *G01S 13/84*(2006.01)i
FI:   G01S11/08; G01S13/84

According to International Patent Classification (IPC) or to both national classification and IPC

### B. FIELDS SEARCHED

Minimum documentation searched (classification system followed by classification symbols)

G01S 11/00 - G01S 11/16; G01S 13/74 - G01S 13/84; G01S 5/00 - G01S 5/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2019-174418 A (TOKAI RIKA CO., LTD.) 10 October 2019 (2019-10-10) paragraphs [0015]-[0022], [0040]-[0045] | 1-3, 5 |
| Y | | 1-7 |
| A | | 8-13 |
| Y | WO 2021/095558 A1 (SONY SEMICONDUCTOR SOLUTIONS CORP.) 20 May 2021 (2021-05-20) paragraphs [0037]-[0079], [0094], [0119], fig. 9 | 1-7 |
| A | US 2016/0011295 A1 (DEERE & COMPANY) 14 January 2016 (2016-01-14) paragraphs [0055]-[0075], fig. 2A, 2B | 1-13 |
| A | US 2016/0102964 A1 (LEXMARK INTERNATIONAL, INC.) 14 April 2016 (2016-04-14) fig. 2-4 | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 April 2023** | **18 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

| International application No. |
| --- |
| **PCT/JP2023/007511** |

| Patent document cited in search report | | | Publication date (day/month/year) | Patent family member(s) | | | Publication date (day/month/year) |
| --- | --- | --- | --- | --- | --- | --- | --- |
| JP | 2019-174418 | A | 10 October 2019 | JP | 6916142 | B2 | |
| WO | 2021/095558 | A1 | 20 May 2021 | EP | 4060380 | A1 | |
| | | | | paragraphs [0036]-[0078], [0093], [0118], fig. 9 | | | |
| | | | | JP | 2021-81200 | A | |
| | | | | CN | 114616838 | A | |
| | | | | KR | 10-2022-0098132 | A | |
| US | 2016/0011295 | A1 | 14 January 2016 | US | 9194936 | B1 | |
| | | | | US | 2016/0011296 | A1 | |
| | | | | US | 2016/0054426 | A1 | |
| | | | | GB | 2530842 | A | |
| | | | | GB | 2530843 | A | |
| | | | | GB | 2530844 | A | |
| | | | | DE | 102015210476 | A1 | |
| US | 2016/0102964 | A1 | 14 April 2016 | US | 2016/0104013 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018197697 A
- JP 9152478 A
- JP 2022 A
- JP 098457 A